# EUROPÄISCHE PATENTSCHRIFT

(11) **EP 0 510 784 B1**
(45) Veröffentlichungstag und Bekanntmachung des Hinweises auf die Patenterteilung: **04.03.1998**
(21) Anmeldenummer: 92250090.5
(22) Anmeldetag: 22.04.1992
(51) Int. Cl.: F16L 55/165

(54) **Schlauch zum Auskleiden von Druckrohrleitungen**
Tubular liner for pressure pipes
Revêtement tubulaire pour canalisations sous pression

(30) Priorität: 24.04.1991 DE 4113378
(43) Veröffentlichungstag der Anmeldung: 28.10.1992
(73) Patentinhaber: Schwert, Siegfried, 14165 Berlin (DE); Huemer, Franz X., A-1060 Wien (AT)
(72) Erfinder: Schwert, Siegfried, 14165 Berlin (DE); Huemer, Franz X., A-1060 Wien (AT)
(74) Vertreter: Pfenning, Meinig & Partner

(56) Entgegenhaltungen:
- EP-A- 0 023 932
- EP-A- 0 370 108
- EP-A- 0 392 026
- DE-A- 3 414 531
- DE-A- 3 505 107
- DE-U- 8 614 903
- GB-A- 1 416 947
- GB-A- 2 156 240
- GB-A- 2 181 670
- PATENT ABSTRACTS OF JAPAN vol. 5, no. 53 (M-63)14. April 1981 & JP-A-56 008 229 ( TOKYO GAS CO. LTD. ) 28. Januar 1981

## Beschreibung

Die Erfindung betrifft einen Schlauch nach dem Oberbegriff des Anspruchs 1.

Aus der DE 34 14 531 C2 ist ein schlauchförmiges Auskleidungsmaterial für Rohrleitungen bekannt, das einen Textilmantel aus Kettfäden und Schußfäden aufweist, der mit einer Beschichtung aus einem flexiblen Kunstharz überzogen ist. Das Auskleidungsmaterial wird mit einem Klebstoff auf seiner Innenfläche in die Rohrleitung eingeführt und innerhalb dieser vorwärts bewegt, wobei es unter Einwirkung eines Druckmittels gewendet wird, so daß der Klebstoff zwischen das Auskleidungsmaterial und die Innenwandung der Rohrleitung gelangt. Um dieses Auskleidungsmaterial auch für Rohrleitungen mit relativ geringem Innendurchmesser und stärkeren Krümmungen geeignet zu machen, werden Kettfäden aus einem elastischen Garn verwendet, um das über seine gesamte Länge ein synthetisches Garn oder Garne gewickelt sind. Hierdurch erhält man eine hohe Dehnbarkeit in Längsrichtung, so daß beispielsweise die Bildung von Falten im Bereich der Krümmungen vermieden wird. Auch die Schußfäden können aus einem elastischen Garn bestehen, um das über seine gesamte Länge ein synthetisches Garn gewickelt ist. Hierdurch ist eine gute Anpassung an variierende Innendurchmesser der Rohrleitungen möglich.

In der DE 35 05 107 C2 wird das vorgenannte Auskleidungsmaterial als nachteilig beschrieben, da es ein elastisches Polyurethangarn benötige, das relativ teuer und für größere Schlauchdurchmesser nicht geeignet sei. Um daher ein derartiges Auskleidungsmaterial auch für stärker gekrümmte Rohrleitungen mit relativ großem Innendurchmesser verwenden zu können, wird vorgeschlagen, die Kettfäden aus gekräuselten Garnen aus Polybutylen-Terephtalat-Fasern und die Schußfäden aus einem Garn aus synthetischen Fasern herzustellen, wobei die Schußfäden gegebenenfalls auch aus gekräuseltem Garn bestehen.

Derartige schlauchförmige Auskleidungen für Rohrleitungen müssen normalerweise eine hohe Festigkeit in Längsrichtung haben. Die Rohrleitungen sind üblicherweise nur in Längsrichtung hohen mechanischen Beanspruchungen ausgesetzt, beispielsweise durch Setzungen des Erdreichs, in dem die Rohrleitungen verlegt sind. In Querrichtung dagegen müssen die gegenüber den Rohrleitungen mit einem bestimmten Durchmesser-Untermaß hergestellten Schläuche sich unter einem Innendruck radial ausdehenen und sich an der Rohrinnenwand anlegen. Der bis zum Aushärten des Klebmittels aufrechterhaltene Innendruck soll dabei möglichst niedrig sein, damit das Klebmittel nicht in seitliche Rohrabgänge gequetscht wird, wodurch zum einen die Haftung der Auskleidung an der Rohrinnenwand beeinträchtigt und zum anderen das unterirdische Anbinden der Rohrabgänge, d.h. das Anbohren dieser Abgänge aus der Rohrleitung heraus, erschwert oder sogar unmöglich gemacht werden. Weiterhin ist der Umstülpungsvorgang so durchzuführen, daß die Gefahr einer Beschädigung der Auskleidung gering und auch ein niedriger Transportdruck erforderlich ist, wodurch der Vorgang besser kontrolliert werden kann.

Es ist daher die Aufgabe der vorliegenden Erfindung, einen Schlauch zum Auskleiden von Druckrohrleitungen mit einem aus Kunststoff bestehenden Kett- und Schußfäden gebildeten Gewebe und einer einseitig auf das Gewebe aufgetragenen, für das in den Rohrleitungen zu transportierende Medium undurchlässigen Beschichtung aus thermoplastischem Kunststoff, der durch den Druck eines Fluids in eine Rohrleitung eingebracht und dabei umgestülpt wird, wobei vor dem Umstülpen im Innern des Schlauches befindliches Klebmittel zwischen die Außenseite des Schlauches und die Innenwandung der Rohrleitung gelangt, daß im ausgehärteten Zustand den Schlauch fest an die Rohrleitung hält, zu schaffen, der in Längsrichtung eine hohe Festigkeit aufweist und einen geringen Standdruck während des Aushärtens des Klebmittels sowie auch einen geringen Transportdruck beim Einbringen des Schlauches in die Rohrleitung erfordert.

Diese Aufgabe wird erfindungsgemäß gelöst durch die im kennzeichnenden Teil des Anspruchs 1 angegebenen Merkmale. Vorteilhafte Weiterbildungen des erfindungsgemäßen Schlauches ergeben sich aus den Unteransprüchen.

Dadurch, daß die Dehnbarkeit des Gewebes in Querrichtung des Schlauches um mindestens ein Drittel höher ist als in seiner Längsrichtung und vorzugsweise mindestens doppelt so groß, erhält man eine solche Beziehung zwischen den mechanischen Eigenschaften des Schlauches, daß er die Anforderungen an eine hohe Festigkeit im Betrieb einerseits und an ein problemloses Einbringen andererseits optimal erfüllt.

Der Anteil der Kett-fäden im Gewebe beträgt > 65 Ge .% und der Anteil der Schußfäden < 35 Gew.%; hierdurch konzentriert sich das Gewebematerial im wesentlichen auf die Kettfäden, so daß sich eine im Vergleich zum Gesamtmaterial große Querschnittsfläche und damit eine entsprechende Längsfestigkeit ergeben. Das sich in Querrichtung erstreckende Material hingegen weist eine deutlich geringer Querschnittfläche auf, so daß zu seiner Dehnung relativ geringe Kräfte benötigt werden.

Vorteilhaft sind die Kettfäden glatt ausgebildet und die Schußfäden leicht texturiert. Die sich aus der Texturierung ergebende leichte Schrumpfung der Schußfäden verstärkt ihre Dehnbarkeit erheblich.

Es wird weiterhin vorzugsweise eine Gewebeart gewählt, bei der die Einarbeitung für die Kettfäden < 2 % und für die Schußfäden > 12 % beträgt. Einarbeitung bedeutet hier den Überschuß der Länge eines in das Gewebe eingearbeiteten Fadens über die entsprechende Länge des Gewebes. Die hohe Einarbeitung der Schußfäden ergibt sich im wesentlichen daraus, daß jeweils zwischen zwei Kreuzungspunkten der Schußfäden zwei oder mehr Kettfäden liegen, während die Schußfäden selbst jeweils einander abwechselnd über und unter den Kettfäden liegen.

Hierdurch ergibt sich ein wellenförmiger Verlauf der Schußfäden um die Kettfäden herum, während die Kettfäden im wesentlichen geradlinig verlaufen.

Die Reißfestigkeit der Kettfäden ist möglichst hoch zu wählen und darf 500 · 10³ N · m/kg (5,6 g/den) nicht unterschreiten, während diese bei den Schußfäden zum Zwecke der besseren Dehnbarkeit niedriger liegen muß und 442 - 10³ N · m/kg (5 g/den) nicht überschreiten darf.

Die gute Dehnbarkeit in Querrichtung führt auch dazu, daß sich im Bereich von Rohrabgängen flache nach außen gerichtete Mulden im Auskleideschlauch bilden. Diese sind bei einer anschließenden optischen Abtastung der Auskleidung von innen leicht erkennbar, beispielsweise beim Durchfahren mit einer Kamera, so daß das Anbohrgerät zum Öffnen des Abgangs in der Rohrleitung entsprechend positioniert werden kann.

Durch die gute Dehnbarkeit des Schlauches in Querrichtung folgt er auch Krümmungen der Rohrleitung ohne Faltenbildung, beispielsweise Krümmungen um 90° mit einem Radius, der dem dreifachen Rohrdurchmesser entspricht.

Die Erfindung wird im folgenden anhand eines in den Figuren dargestellten Ausführungsbeispiels näher erläutert. Es zeigen:
- Fig. 1: die Draufsicht auf einen vergrößerten Gewebeausschnitt,
- Fig. 2: einen Querschnitt durch den Gewebeausschnitt nach Fig. 1, und
- Fig. 3: einen Längsschnitt durch den Gewebeausschnitt nach Fig. 1.

Die Kettfäden 1 und Schußfäden 2 bestehen jeweils aus Polyester-Multifil-Garn, wobei die Anzahl der Filamente pro Faden bei der Kette 400 und beim Schuß 72 beträgt. Die Schußfäden sind durch Wärmebehandlung leicht geschrumpft, vorzugsweise im Bereich bis zu 10 %, so daß ihre Reißdehnung 18 % beträgt im Vergleich zu 11 % bei den Kettfäden. Die Garnfestigkeit der Kettfäden liegt bei etwa 700 · 10³ N · m/kg (8 g/den) und die der Schußfäden bei etwa 320 · 10³ N · m/kg (3,6 g/den). Die Anzahl der Kettfäden pro 10 cm beträgt 3 x 66 und die der Schußfäden 81. Die Feinheit der Kettfäden liegt bei 223 g/km und die der Schußfäden bei 129 g/km. Damit ergibt sich eine flächenbezogene Masse der Kettfäden von 444 g/m² und der Schußfäden von 129 g/m², d.h., der Anteil der Kettfäden beläuft sich auf ca. 77 % und der Schußfäden auf ca. 23 % Gesamtgewicht.

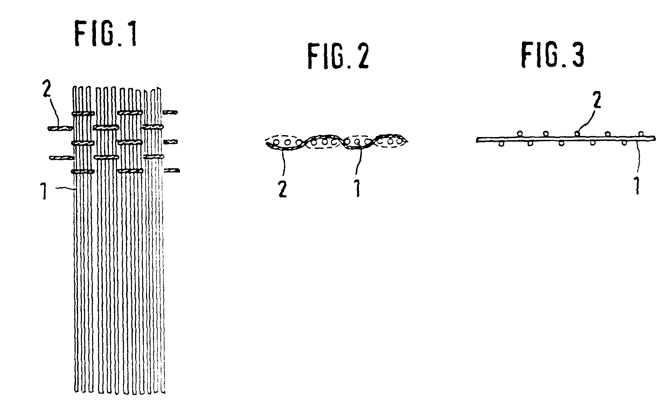

Wie die Figuren zeigen, ist das Gewebe in der Weise ausgebildet, daß zwischen jeweils zwei Kreuzungspunkten zweier benachbarter Schußfäden 2 in Längsrichtung der Kettfäden gesehen (Fig. 2) drei Kettfäden 1 liegen, während die Schußfäden 2 einander abwechselnd über und unter den Kettfäden 1 liegen. Hieraus ergibt sich, wie aus Fig. 2 und 3 ersichtlich ist, daß die Kettfäden 1 im wesentlichen geradlinig verlaufen, wohingegen die Schußfäden 2 um die Kettfäden 1 herumgeführt sind und somit einen wellenförmigen Verlauf haben. Hieraus resultiert eine Einarbeitung der Kettfäden von ca. 0,5 % und der Schußfäden von ca. 23 %.

Für das in dieser Weise hergestellte Gewebe schließlich erhält man bei einem Streifentest in Richtung der Kettfäden eine Festigkeit von 4,62 kN/50 mm und eine Dehnbarkeit von 13 %, während in Richtung der Schußfäden die Festigkeit 0,77 kN/50 mm und die Dehnbarkeit 44 % betragen. Somit ist die Festigkeit in Kettrichtung etwa sechsmal so groß wie die in Schußrichtung, während andererseits die Dehnbarkeit in Schußrichtung etwa 3,4 mal größer als in Kettrichtung ist.

Das Gewebe wird auf der Seite, die die Innenseite der Auskleidung darstellt, mit einer für das in der Rohrleitung zu transportierende Medium dichten Beschichtung aus einem thermoplastischen Kunststoff, wie Polyurethan, versehen. Dieser Kunststoff soll nur etwa bis zur Hälfte in das Gewebe eindringen, damit das auf der anderen Seite aufgetragene Klebmittel seinerseits die Möglichkeit hat, mit dem Gewebe eine feste Verbindung einzugehen.

Der beschriebene Schlauch eignet sich für Gasverteilungsnetze mit einem Innendruck bis zu 3 bar. Der Druck zum Umstülpen und Einbringen des Schlauches in die Rohrleitung sowie der Dehn- und Anpreßdruck bis zum Aushärten des Klebmittels liegt unter 2 bar. Der Schlauch ist jedoch auch für höhere Rohrleitungsdrücke, beispielsweise Wasserrohrleitungen mit einem Innendruck bis 6 bar, verwendbar, wobei er in verstärkter Ausfertigung hergestellt wird.

## Patentansprüche

1. Schlauch zum Auskleiden von Druckrohrleitungen mit einem aus aus Kunststoff bestehenden Kett- und Schußfäden gebildeten Gewebe und einer einseitig auf das Gewebe aufgetragenen, für das in den Rohrleitungen zu transportierende Medium undurchlässigen Beschichtung aus thermoplastischem Kunststoff, der durch den Druck eines Fluids in eine Rohrleitung eingebracht und dabei umgestülpt wird, wobei vor dem Umstülpen im Inneren des Schlauches befindliches Klebmittel zwischen die Außenseite des Schlauches und die Innenwandung der Rohrleitung gelangt, das im ausgehärteten Zustand den Schlauch fest an der Rohrleitung hält, wobei
die Beschichtung aus thermoplastischem Kunststoff auf der Innenseite des Gewebes aufgebracht ist,
dadurch **gekennzeichnet**, daß
die Dehnbarkeit des Gewebes in Querrichtung des Schlauches um mindestens ein Drittel höher ist als in seiner Längsrichtung,
daß die Reißfestigkeit der in Längsrichtung des Schlauches verlaufenden Kettfäden (1) mindestens 500·10³ N·m/kg und der in Querrichtung des Schlauches verlaufenden Schußfäden (2) höchstens 442·10³ N·m/kg beträgt, und
daß im Gewebe der Anteil der Kettfäden (1) >65 Gew.% und der Anteil der Schußfäden (2) <35 Gew.% beträgt.

2. Schlauch nach Anspruch 1, dadurch gekennzeichnet, daß die Dehnbarkeit des Gewebes in Querrichtung des Schlauches mindestens doppelt so groß ist wie in seiner Längsrichtung.

3. Schlauch nach Anspruch 1 oder 2, dadurch gekennzeichnet, daß die Kettfäden (1) glatt ausgebildet und die Schußfäden (2) leicht texturiert sind.

4. Schlauch nach einem der Ansprüche 1 bis 3, dadurch gekennzeichnet, daß die Einarbeitung für die Kettfäden (1) < 2 % und für die Schußfäden (2) > 12 % beträgt.

5. Schlauch nach einem der Ansprüche 1 bis 4, dadurch gekennzeichnet, daß die Schußfäden (2) jeweils einander abwechselnd über und unter den Kettfäden (1) liegen.

6. Schlauch nach Anspruch 5, dadurch gekennzeichnet, daß zwischen den Kreuzungspunkten jeweils zweier benachbarter Schußfäden (2) zwei oder mehr Kettfäden (1) liegen.

7. Schlauch nach einem der Ansprüche 1 bis 6, dadurch gekennzeichnet, daß die Kett- und Schußfäden (1,2) aus Polyester bestehen.

8. Schlauch nach einem der Ansprüche 1 bis 7, dadurch gekennzeichnet, daß die Beschichtung aus Polyurethan besteht.

9. Schlauch nach einem der Ansprüche 1 bis 8, dadurch gekennzeichnet, daß die einseitige Beschichtung etwa bis zur Hälfte in das Gewebe eindringt.

## Claims

1. Hose for lining pressure pipes, comprising a plastic link and crossweave fabric and a thermoplastic coating, which is singlesidedly applied to the fabric and impermeable to media transported in the pipes and applied in a pipe by pressure of a fluid whilst being turned over, and prior to turning over adhesive located inside the hose arrives between the outside of the hose and the inner wall of the pipe which in its hardened state firmly holds the hose against the pipe and the thermoplastic coating is applied to the inside of the fabric, **characterised in that**
the stretchability of the fabric in the transverse direction of the hose is greater by at least one third than in its longitudinal direction,
the tenacity of the link threads (1) extending in the longitudinal direction of the hose is at least 500·10³ Nm/kg, and of the crossweave threads (2) extending in the transverse direction of the hose is maximum 442·10³ Nm/kg, and
the proportion of link threads (1) in the weave is >65 weight-%, and the proportion of crossweave threads (2) is <35 weight-%.

2. Hose according to Claim 1, **characterised in that** the stretchability of the fabric in the transverse direction of the hose is at least twice as big as that in its longitudinal direction.

3. Hose according to Claim 1 or 2, **characterised in that** the link threads (1) are smooth and the crossweave threads (2) are lightly textured.

4. Hose according to one of Claims 1 to 3, **characterised in that** inclusion of the link threads (1) < 2% and of the crossweave threads (2) > 12%.

5. Hose according to one of Claims 1 to 4, **characterised in that** the respective crossweave threads (2) lie altemately above and below the link threads (1).

6. Hose according to Claim 5, **characterised in that** between the intersecting points of two adjacent crossweave threads (2) lie two or more link threads (1).

7. Hose according to one of Claims 1 to 6, **characterised in that** the link and crossweave threads (1, 2) are made of polyester.

8. Hose according to one of Claims 1 to 7, **characterised in that** the coating is made of polyurethane.

9. Hose according to one of Claims 1 to 8, **characterised in that** the singlesided coating penetrates approximately halfway into the fabric.

## Revendications

1. Tuyau pour revêtir des conduites tubulaires sous pression, comportant un tissu formé de fils de chaîne et de fils de trame en matière plastique, et par un revêtement en matière thermoplastique, qui est porté sur une face par le tissu et est imperméable au fluide devant être transporté dans les conduites tubulaires et qui est inséré et est retroussé dans une conduite tubulaire sous l'action de la pression d'un fluide, et dans lequel un agent adhésif, qui est situé à l'intérieur du tuyau avant le retroussement et qui, à l'état durci, maintient fermement le tuyau contre la conduite tubulaire, parvient entre la face extérieure du tuyau et la paroi intérieure de la conduite tubulaire, et dans lequel le revêtement en matière thermoplastique est disposé sur la face intérieure du tissu,
caractérisé en ce
que l'extensibilité du tissu dans la direction transversale du tuyau est supérieure au moins d'un tiers à ce qu'elle est dans la direction longitudinale du tuyau,
que la résistance au déchirement des fils de chaîne (1), qui s'étendent dans la direction longitudinale du tuyau, est égale au moins à 500.10 N.m/kg et que la résistance au déchirement des fils de trame (2), qui s'étendent dans la direction transversale du tuyau, est égale au maximum à 442.10 N.m/kg, et
que dans le tissu le pourcentage des fils de chaîne (1) est > 65 % en poids et le pourcentage des fils de trame (2) est < 35 % en poids.

2. Tuyau selon la revendication 1, caractérisé en ce que l'extensibilité du tissu est deux fois plus élevée dans la directicn transversale du tuyau que dans sa direction longitudinale.

3. Tuyau selon la revendication 1 ou 2, caractérisé en ce que les fils de chaîne (1) sont lisses et les fils de trame (2) sont légèrement texturés.

4. Tuyau selon l'une des revendications 1 à 3, caractérisé en ce que le dépassement en longueur des fils de chaîne (1) est < 2 % et le dépassement en longueur des fils de trame (2) est > 12 %.

5. Tuyau selon l'une des revendications 1 à 4, caractérisé en ce que les fils de trame (2) sont situés respectivement d'une manière alternée au-dessus et au-dessous des fils de chaîne (1).

6. Tuyau selon la revendication 5, caractérisé en ce que deux fils de chaîne (1) ou plus sont disposés entre des points d'intersection de deux fils de trame respectifs voisins (2).

7. Tuyau selon l'une des revendications 1 à 6, caractérisé en ce que les fils de chaîne et les fils de trame (1, 2) sont formés de polyester.

8. Tuyau selon l'une des revendications 1 à 7, caractérisé en ce que le revêtement est formé de polyuréthane.

9. Tuyau selon l'une des revendications 1 à 8, caractérisé en ce que le revêtement sur une face pénètre approximativement jusqu'à la moitié de l'épaisseur dans le tissu.
